# EUROPEAN PATENT APPLICATION

(11) **EP 0 736 790 A1**
(43) Date of publication of application: **09.10.1996**
(21) Application number: 96500035.9
(22) Date of filing: 27.03.1996
(51) Int. Cl.: G02C 5/22

(54) **Elastic hinge for spectacles**

(30) Priority: 05.04.1995 ES 9500678
(71) Applicant: INDUSTRIAS TEIXIDO, S.A., 43390 Riudecols, Tarragona (ES)
(72) Inventor: Gonzales Vilaltella, Jaime, 43390 Riudecols (ES)
(74) Representative: Pastells Teixido, Manuel

(57) **Abstract**

It consists of a front half-hinge joined to the frame and a rear half-hinge elastically coupled to a casing fixedly attached to the arm. It is characterized in that the front half-hinge features a right-angled back edge in such a way that with said edge the front half-hinge engages, by one or other of its adjacent right angles, a 90° angular notch provided in the upper and lower faces of the front opening of the casing in relation, respectively, to the unfolded or folded position of the arms as against the frame. Casing front opening having its closed sidepieces forming a protecting housing for the back part of the rear half-hinge.

## Description

This invention relates to an elastic hinge for spectacles.

Various models of elastic hinges for spectacles exist, intended to give the arms suitable elasticity in their hinged outward flexion, ensuring their return to the normal position for use, so as to fit the user perfectly.

These elastic hinges are generally coupled to a casing fixedly attached to the arm, which slides over an axial core linked to the matching rear half-hinge and which contains an interior spring that pushes the said casing against the front half-hinge fixed to the frame.

Generally, the half-hinges, male and female, are joined to each other with a screw-pivot, wherein the front, or female, half-hinge is provided with a rear endpiece in two planes at 90° against which the front opening of the casing rests in the unfolded position and the folded position of the arms, respectively.

The purpose of the present invention is to achieve a stable joint between the two half-hinges without swivelling movements which could damage the joint screw-pivot.

By means of the present invention, furthermore, this kind of elastic hinge is improved, since the rear part of the half-hinge is protected against dust and the entry of foreign elements which could damage the joint between the half-hinges.

For the stability referred to in connection with the joint between the half-hinges, it has been arranged that the rear edge of the front half-hinge is provided with a right-angled endpiece so that, with this edge, this half-hinge will engage, on one or the other of its adjacent right-angles, a 90° angle notch provided in the upper or lower face of the front opening of the casing, depending on the unfolded or folded position, respectively, of the arms as against the frame.

Protection of the back part of the rear half-hinge is achieved by means of sidepieces completely closed at the front opening of the casing.

These and other features will become more apparent from the following detailed description, for a better understanding of which one sheet with drawings are enclosed and in which an exemplary embodiment that is a non-limiting example of the scope of the invention is shown.

### Brief Description of the Drawings:

Fig. 1 and 2 are, respectively, a plan and a side elevation view of the hinge in question.

Fig. 3, 4 and 5 are a view of the position change of the arm from their unfolded use position to the folded yuxtaposed position to the frame (not shown), and

Fig. 6 is a front elevation view of the casing.

In accordance with the drawings, the elastic hinge consists of a female front half-hinge 1 and a male rear half-hinge 2, the former being prolonged to form the endpiece R of the arm P, wherein this endpiece is fixedly attached to the frame (not shown).

The rear half-hinge 2 is elastically coupled by means of a spring 3 to a casing 4 which is prolonged backwards to form the arm P.

If so desired, both the front half-hinge 1 and the casing 4 can be joined by welding to an independent endpiece and arm, respectively.

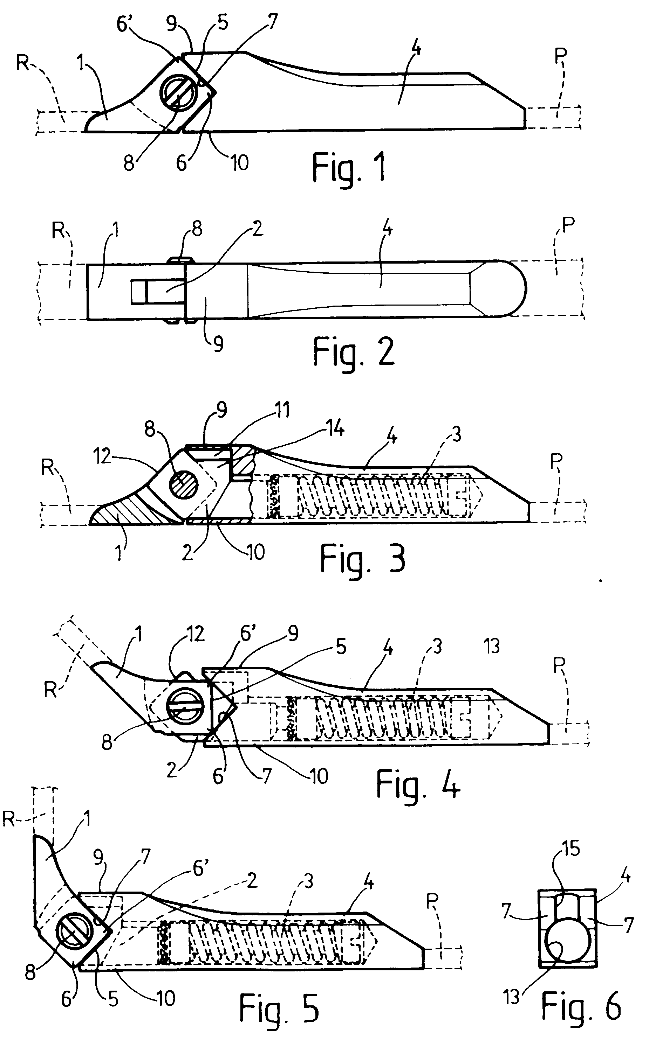

The front half-hinge 1 features its rear edge 5 provided with a rectangularly topped and forming two right angles 6 and 6' by means of which it engages 90° angular notches 7 provided in the upper and lower faces of the front opening of the casing 4 to be able to place the arms P in the unfolded position for use (figure 1) in which the angle 6 engages the notches 7 or else in the folded position in respect to the frame (figure 5) in which it is the angle 6' that engages the notches 7, going from one position to the other by a turn of 90° round the screw-pivot 8 of the hinge.

The sidepieces 9 and 10 of the casing are totally closed, forming in the front opening a protective housing 11 (figure 3) for the back part of the rear half-hinge 2.

For the rear right-angled edge of the front half-hinge 1, the rear half-hinge 2 features its front edge 12 also rectangularly topped.

The casing 4 features a longitudinal hollow with a circular cross-section 13 for housing the spring 3 and the means for joining the rear half-hinge to the casing, wherein the middle part of this half-hinge 2 is provided with a side stepped shoulder 14 (figure 3) which engages a notch 15 provided in the opening of the casing (figure 6).

## Claims

1. An elastic hinge for spectacles consisting of a front half-hinge joined to the frame and a rear half-hinge elastically coupled to a casing fixedly attached to the arm, characterized in that a front half-hinge features a rectangularly topped back edge in such a way that the said edge of the front half-hinge engages with one or other of its adjacent right angles a 90° angular notch provided in the upper and lower faces of the front opening of the casing in the unfolded or folded positions, respectively, of the arms in relation to the frame.

2. An elastic hinge for spectacles according to Claim 1, characterized in that the front opening of the casing features closed sidepieces, forming a protective housing for the back part of the rear half-hinge.

3. An elastic hinge for spectacles according to Claim 1, characterized in that the rear half-hinge features a rectangularly topped front edge matching the rear edge of the front half-hinge.
